# EUROPEAN PATENT APPLICATION

(11) **EP 4 596 064 A1**
(43) Date of publication of application: **06.08.2025**
(21) Application number: 25155081.0
(22) Date of filing: 30.01.2025
(51) Int. Cl.: A63F 13/25, A63F 13/52, A63F 13/35

(54) **IMAGE TRANSMISSION IN GAMING SYSTEMS**

(30) Priority: 02.02.2024 GB 202401382
(71) Applicant: Sony Interactive Entertainment Inc., Tokyo 108-0075 (JP)
(72) Inventor: LEUNG, Jun Yen, London, W1F 7LP (GB); CERRATO, Maurizio, London, W1F 7LP (GB); GREEN, Lawrence Martin, London, W1F 7LP (GB); MONTI, Maria Chiara, London, W1F 7LP (GB); CONNOR, Patrick John, London, W1F 7LP (GB); GUPTA, Rajeev, London, W1F 7LP (GB)
(74) Representative: Gill Jennings & Every LLP

(57) **Abstract**

A gaming headset comprising a processing unit configured to: receive incomplete video frame data, representing a first portion of a video frame; predict video frame data by applying a machine learning algorithm to the incomplete video frame data to generate predicted video frame data; combine the incomplete video frame data and predicted video frame data to generate complete video frame data representing a whole video frame; output the complete video frame data to a display.

## Description

### FIELD OF THE INVENTION

The present invention relates to improved techniques for transmitting images and videos.

### BACKGROUND

The ability to render high resolution images quickly is crucial for immersive gaming experiences such as VR and AR gaming experiences. These systems are designed to have as little latency as possible to give fast and accurate feedback to users based on their actions.

An issue associated with modern virtual reality (VR) headsets is that achieving a high-quality video output from the screen of the headset, whilst maintaining portability of the headset, can be difficult. For example, transmitting uncompressed video data from a game console to a VR headset requires a high bit rate data transfer. As VR headsets must be wearable by a user, it is often not practical to secure a large and heavy high-performance device that can facilitate such a high bit rate data transfer onto a user's body.

A further difficulty present with current systems is that standard wireless means for transmitting data, such as radio signals, Bluetooth, and Wi-Fi, do not provide the necessary bandwidth required to transmit the uncompressed video data to a VR headset. These mechanisms can suffer from saturation when transmitting the required quantity of data at an acceptable latency. Furthermore, crosstalk from other nearby devices operating on the same network can disrupt these uncompressed video data transmissions.

Checkerboard rendering is a 3D computer graphics rendering technique to assist graphics processing units (GPUs) with rendering high resolution images. The technique involves rendering a portion, for example 50%, of any given scene and then a reconstruction filter is used to extrapolate the appearance of the unrendered parts of the scene. Checkerboard rendering is an upscaling technique which can be used to increase the resolution of an image using less demanding hardware. A main problem with checkerboard rendering is that visual artefacts can be present in the output, creating noisy images which can be less sharp.

There is a need to improve high resolution image rendering techniques, suitable for VR and AR gaming systems.

### SUMMARY OF INVENTION

In accordance with an aspect of the present invention there is provided a gaming headset comprising a processing unit configured to: receive incomplete video frame data, representing a first portion of a video frame; predict video frame data by applying a machine learning algorithm to the incomplete video frame data to generate predicted video frame data; combine the incomplete video frame data and predicted video frame data to generate complete video frame data representing a whole video frame; and output the complete video frame data to a display.

In this way, only part of the video frame is transmitted to the gaming headset rather than the whole video frame and so a reduced amount of data needs to be transmitted from the console to the headset.

The processing unit may be further configured to: receive missing video frame data representing a second portion of the video frame; input the missing video frame data into the machine learning algorithm; and train and update the machine learning algorithm based on the missing video data such that the machine learning algorithm generates improved predicted video frame data. The machine learning algorithm may also be referred to as a machine learning model. The machine learning algorithm can be continuously improved and updated so that the accuracy of the complete video frame data output to the display is improved.

Preferably, the first portion comprises at least 50% of the video frame. In this way, sufficient data can be input into the machine learning model such that the machine learning model is able to accurately predict the missing data. In some examples, the first portion may be more than 50% of the video frame data, for example 60%, 70& or 80%. In some examples 80-90% of the video frame data. The first portion must be less than 100% of the video frame data otherwise the benefits of the invention cannot be realised.

The incomplete video frame data may comprise N pixels and the missing video frame data may comprise M pixels. The whole video frame may comprise N+M pixels in total.

In some examples, the N pixels may correspond to pixels having even numbered indices and the M pixels may correspond to pixels having odd numbered indices. In other examples, the M pixels may correspond to pixels having even numbered indices and the N pixels may correspond to pixels having odd numbered indices. It will be appreciated that N and M could correspond to any other set of numbered indices.

N and M may be equal, and so there may be the same number of pixels in the first portion and the second portion. Alternatively, N and M may be different and so there may be a different number of pixels in the first and second portions.

Preferably, the processing unit is configured to receive the missing video frame data after the incomplete video frame data. This means that the incomplete video frame data can be sent first at a high frequency and the missing video frame data can be sent subsequently at a lower frequency. This means that the current frame data (the incomplete video frame data) is sent quickly and efficiently so that the gaming experience of the user is not affected due to latency that can be experienced when large amounts of data are transmitted.

The missing video frame data may be received by the gaming headset 2 ms after the gaming headset receives the incomplete video frame data. Any other suitable delay could be used provided that the delay does not cause the missing video frame data to be received a significant number of frames after the incomplete frame data has been sent. In other words, the missing frame data should preferably be sent no more than one frame behind the frame corresponding to the incomplete frame data.

The incomplete video frame data may be received by the headset every 10 ms. Any other suitable time interval could also be used.

The gaming headset is preferably a VR / AR headset.

The machine learning algorithm preferably comprises an artificial neural network. The artificial neural network may be a recurrent neural network, or any other suitable neural network. The machine learning algorithm may be stored on a chip within the gaming headset.

According to another aspect there is provided a computer implemented method of displaying a video frame, the method comprising: receiving incomplete video frame data, representing a first portion of a video frame; predicting video frame data by applying a machine learning algorithm to the incomplete video frame data to generate predicted video frame data; combining the incomplete video frame data and predicted video frame data to generate complete video frame data representing a whole video frame; and outputting the complete video frame data to a display.

According to another aspect there is provided a method of training a machine learning model comprising: inputting, to a machine learning model, a first image for a current frame comprising incomplete video frame data; predicting video frame data for the current frame by applying a machine learning algorithm to the incomplete video frame data to generate predicted video frame data; inputting, to the machine learning model, a second image comprising an error image, wherein the error image comprises the difference between missing video frame data for a previous frame and the predicted video frame data for a previous frame; and training and updating the machine learning model using the second image.

### BRIEF DESCRIPTION OF DRAWINGS

Embodiments of the present invention will be now described by way of example only with reference to the accompanying drawing in which:
Figure 1 shows an exemplary gaming system; and
Figure 2 shows a schematic diagram of a video frame.

### DETAILED DESCRIPTION

A typical video game system, enabling a user to play video games using a virtual reality (VR) headset, comprises a video game console and a virtual reality (VR) headset, which the user wears on their head. The VR headset receives data wirelessly from the video game console. The VR headset defines a playing area which is provided around the user, within which the user can freely move around whilst playing a video game.

Generally in the video game system, the VR headset receives data, which includes video data, directly from the video game console. This data is communicated wirelessly from the console directly to the headset for example, via radio signals such as Wi-Fi^{®}. Video data rendered by the console is generally uncompressed and therefore requires a large bandwidth to be transmitted successfully. The present invention reduces the need for large bandwidth by reducing the amount of data that needs to be transmitted each frame to a VR headset from the console.

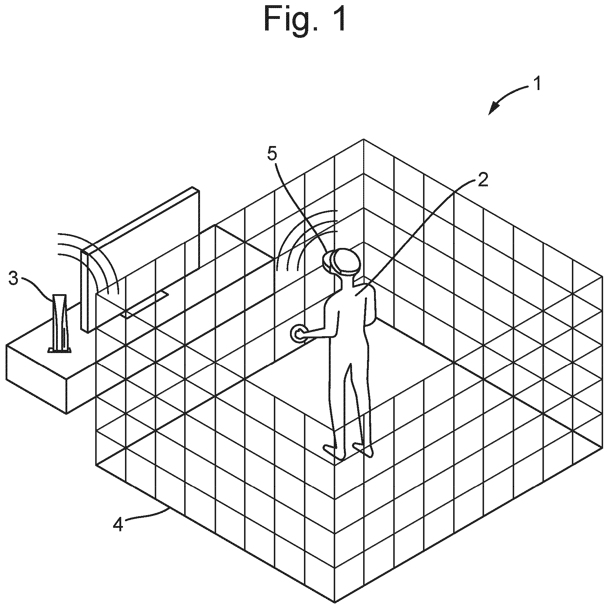

Figure 1 shows a video game system 1 comprising a video game console 3 and headset 5 worn by a user 2. A playing area 4 is defined by the headset 5. The video game console 3 comprises a processor (not shown) which is configured to render video data based on video game data stored in a memory (also not shown) of the console 3. The memory is preferably a framebuffer and the video game data comprises data representing all the pixels in a complete video frame.

Instead of sending all the video game data for a complete video frame to the headset 5, a first portion of the video game data for a given frame can be sent to the headset 5 and the remaining portion of the video game data for the same frame can be predicted using machine learning. The received video game data and predicted video game data can be combined to form complete video game data for a video fame which can be output to a screen of the headset 5.

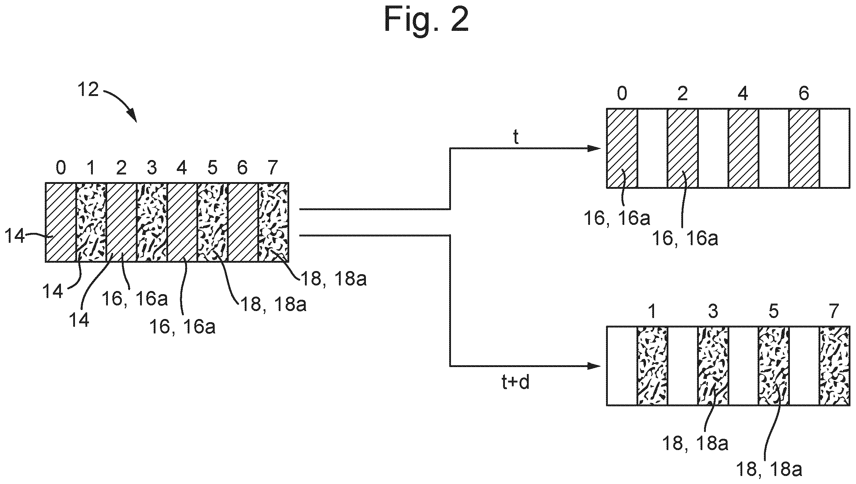

Figure 2 shows a schematic diagram of video game data for a complete video frame 12. The video game data comprises data 14 representing the pixels in the video frame 12. This data 14 can be split into a first portion 16 comprising N pixels and a second portion 18 comprising M pixels, and so the whole video frame 12 comprises N+M pixels in total. In some examples, N and M are equal but in other examples N and M are not equal.

Figure 2 is a simplified example illustrating a one-dimensional image having only one row of 8 pixels. Here, the first portion 16 comprises 4 pixels (i.e., N=4) and the second portion 18 comprises 4 pixels (i.e., M=4). Each pixel has an associated index from 0 to (x-1), where x is the total number of pixels. Thus, in this example, the first portion 16 comprises pixels having even numbered indices and the second portion 18 comprises pixels having odd numbered indices. It will be appreciated that the first and second portions 16, 18 could be constructed in any manner of different ways, for example the first portion 16 could have pixels having indices 0 to y and the second portion 18 could have pixels having indices (y+1) to (x-1), where y is an arbitrary number between 0 and (x-1).

As mentioned previously, the headset 5 receives, from the console 3, the first portion 16 of the video frame data which represents a first portion of a video frame. This first portion 16 may be referred to as incomplete video frame data 16a because it only includes part of the total video frame data. The incomplete video frame data 16a may comprise 50% of the total video frame data. The headset 5 then predicts video frame data by applying a machine learning model to the incomplete video frame data 16a to generate predicted video frame data. The machine learning model comprises an artificial neural network which can "fill in the gaps" and predict the missing video frame data. The prediction is done in real-time so that the user does not experience any reduction in gaming experience. The predicted video frame data is combined, by the headset 5, with the received incomplete video frame data to generate complete video frame data representing a whole video frame. The completed video frame is then output to a display.

The neural network used to predict missing pixels of a framebuffer, i.e., the machine learning aspect, is located directly on the gaming headset for example the neural network is stored in a chip on the headset. The output of the neural network is a complete image in which some pixels have been predicted. By sending over only a portion of the framebuffer and filling in the rest using predictions by the neural network in the headset, the amount of data that need to be transmitted to the headset, for each frame, is reduced. This provides an advantage that the bandwidth needed when transmitting data to the headset can be reduced because fewer pixels are being transmitted.

The second portion 18 of the video frame data, which can also be referred to as the missing video frame data 18a, can be used to train the machine learning model. To do this, the missing video frame data 18a is transmitted by the gaming console 3 and received by the headset 5, and is then input into the neural network to further refine the neural network's predications through continual learning. In this way, the true missing pixels (here, the missing video frame data 18a) are used to train and update the machine learning model so that the machine learning model outputs improved predicted pixels.

The missing video frame data 18a is transmitted after the transmission of the incomplete video frame data 16a, and at a lower frequency. The gaming headset therefore receives the missing video frame data 18a after the incomplete video frame data 16a, and so there is a delay between receiving the incomplete video frame data 16a and the missing video frame data 18a for the same video frame. If the incomplete video frame data 16a is transmitted at time t then the missing video frame data 18a is transmitted at time t+d, wherein d is the delay.

In one example, incomplete video frame data 16a for each frame may be transmitted to the headset 5 from the gaming console 3 every 10 milliseconds (i.e. t=10 ms), while the corresponding missing video frame data 18a for each frame may be transmitted to the headset 5 from the gaming console 3 with a delay of 2 milliseconds (i.e., the missing video frame data 18a is transmitted every 12 milliseconds, and d=2 ms).

The neural network, which could be a recurrent neural network, would have the following inputs: a first image comprising incomplete video frame data 16a with the corresponding pixels filled in within the image, and "holes", "gaps", or missing pixels in a known pattern (corresponding to the missing video frame data 18a that has not yet been set); and a second image comprising only data in the missing pixels corresponding to the holes in the first image. For the second image, the missing pixel values are calculated as the difference between the missing pixels of the previous video frame received from the gaming console 3 at the delayed time minus the predicted missing pixels output from the neural network for the previous video frame. Thus, the second image input into the neural network acts as an error image which can be used to train and update the neural network. The error image used as the second input to the neural network can use any image error metrics to produce the difference image.

Thus, the inputs to the neural network are: Incomplete_{current} + Error_{current}.

The output of the neural network is: Incomplete_{current} + Predicted_{current} = Complete_{current}.

Here, Error_{current} = Missingₚᵣₑᵥᵢₒᵤₛ - Predictedₚᵣₑᵥᵢₒᵤₛ, wherein "current" and "previous" refer to current and previous video frames respectively.

In summary, the invention aims to reduce the amount of data that needs to be transmitted each frame to a virtual reality/augmented reality headset from the console, by using a neural network located directly on a virtual/augmented reality head-mounted display to predict missing pixels of a framebuffer. The actual missing pixel data can be used to train and update the neural network to provide improved predictions of the mixing pixel data.

## Claims

1. A gaming headset comprising a processing unit configured to:
receive incomplete video frame data, representing a first portion of a video frame;
predict video frame data by applying a machine learning algorithm to the incomplete video frame data to generate predicted video frame data;
combine the incomplete video frame data and predicted video frame data to generate complete video frame data representing a whole video frame;
output the complete video frame data to a display.

2. The gaming headset of claim 1, wherein the processing unit is further configured to:
receive missing video frame data representing a second portion of the video frame;
input the missing video frame data into the machine learning algorithm;
train and update the machine learning algorithm based on the missing video data such that the machine learning algorithm generates improved predicted video frame data.

3. The gaming headset of claim 1 or claim 2, wherein the first portion comprises at least 50% of the video frame.

4. The gaming headset of any preceding claim, wherein the incomplete video frame data comprises N pixels and the missing video frame data comprises M pixels, such that the whole video frame comprises N+M pixels.

5. The gaming headset of claim 4, wherein the N pixels correspond to pixels having even numbered indices.

6. The gaming headset of claim 4 or claim 5, wherein the M pixels correspond to pixels having odd numbered indices.

7. The gaming headset of any of claims 5 to 6, wherein N and M are equal.

8. The gaming headset of any of claims 5 to 6, wherein N and M are different.

9. The gaming headset of any preceding claim, wherein the processing unit is configured to receive the missing video frame data after the incomplete video frame data.

10. The gaming headset of any preceding claim, wherein the processing unit is configured to receive the missing video frame data 2 ms after receiving the incomplete video frame data.

11. The gaming headset of any preceding claim, wherein the incomplete video frame data is received every 10 ms.

12. The gaming headset of any preceding claim, wherein the gaming headset is a VR / AR headset.

13. The gaming headset of any preceding claim, wherein the machine learning algorithm comprises an artificial neural network.

14. The gaming headset of claim 13, wherein the artificial neural network is a recurrent neural network.

15. A computer implemented method of displaying a video frame, the method comprising:
receiving incomplete video frame data, representing a first portion of a video frame;
predicting video frame data by applying a machine learning algorithm to the incomplete video frame data to generate predicted video frame data;
combining the incomplete video frame data and predicted video frame data to generate complete video frame data representing a whole video frame;
outputting the complete video frame data to a display.
